# EUROPÄISCHE PATENTANMELDUNG

(11) **EP 0 542 269 A1**
(43) Veröffentlichungstag der Anmeldung: **19.05.1993**
(21) Anmeldenummer: 92119375.1
(22) Anmeldetag: 12.11.1992
(51) Int. Cl.: B60C 27/10

(54) **Verschlussteile und deren Befestigung an den Endteilen der inneren Halterung einer Gleitschutzkette**

(30) Priorität: 12.11.1991 DE 4137183; 29.11.1991 DE 4139393
(71) Anmelder: Steirische Kettenfabriken Pengg-Walenta KG, A-8021 Graz (AT)
(72) Erfinder: Kronsteiner, Herbert, A-8052 Graz (AT); Schmid, Karl, Ing., A-8580 Köflach (AT)
(74) Vertreter: Betten & Resch

(57) **Zusammenfassung**

Es werden Verschlußteile und deren Befestigung an den Endteilen einer an einer Stelle offenen, aus einem Federstahlring oder einem Stahlseil gebildeten inneren Halterung einer Gleitschutzkette vorgeschlagen, bei welcher die beiden Endteile (7 bzw. 8) der inneren Halterung (3) von dem Durchmesser der inneren Halterung (3) abweichende Verformungen, weiterhin die den Endteilen (7 bzw. 8) der inneren Halterung (3) zugewandten Abschnitte der Verschlußteile (9 bzw. 10) Ausformungen aufweisen, welche unmittelbar benachbart zu den Verformungen der Endteile (7 bzw. 8) der inneren Halterung (3) angeordnet und wobei die Endteile (7 bzw. 8) der inneren Halterung (3) mit den Abschnitten der Verschlußteile (9 bzw. 10) mittels einer aus Gummi oder Kunststoff bestehenden einstückig ausgebildeten Umhüllung (15 bzw. 16) verbunden sind.

## Beschreibung

Die Erfindung betrifft Verschlußteile und deren Befestigung an den Endteilen einer an einer Stelle offenen, aus einem Federstahlring oder einem Stahlseil gebildeten inneren Halterung einer Gleitschutzkette gemäß Anspruch 1, sowie eine innere Halterung für eine Gleitschutzkette, die aus einem Federstahl oder einem Stahlseil gebildet ist, an einer Stelle offen und mittels Verschlußteilen, die an den Endteilen des Federstahls bzw. Stahlseils befestigt sind, verschließbar ist, gemäß unabhängigen Ansprüchen 12 und 16.

Eine solche Gleitschutzkette ist aus der EP 0 149 732 B1 bekannt. Bei dieser Gleitschutzkette ist die innere Halterung als ein an einer Stelle offener, mit einem Hakenverschluß versehener Federstahlbügel ausgebildet, wobei die innere Halterung aber auch aus einem verhältnismäßig steifen Metallseil gebildet sein kann.

Der Hakenverschluß besteht einerseits aus einer an einem ersten freien Endteil der inneren Halterung befestigten Öse und einem an dem zweiten freien Endteil der inneren Halterung befestigten Haken, wobei beide Verschlußteile unabhängig von ihrer in der vorgenannten Druckschrift beschriebenen speziellen Ausbildungsform mittels umpreßter Stahlhülsen an den jeweiligen Endteilen der inneren Halterung befestigt sind. Neben dieser Befestigungsform ist es auch möglich, die Verschlußteile mittels Nietverbindungen oder durch Anschweißen an der inneren Halterung zu befestigen, allen diesen bekannten Befestigungsformen ist gemeinsam, daß sie verhältnismäßig aufwendig sind, und zwar einerseits hinsichtlich ihrer Ausbildung wie auch andererseits bezüglich des Arbeitsaufwandes.

Die vorliegende Erfindung stellt sich nun die Aufgabe, eine möglichst wenig Arbeitsgänge erfordemde und deshalb zeit- und kostensparende Befestigung für die Verschlußteile an den Endteilen der inneren Halterung zu schaffen, wobei einerseits die Verschlußteile selbst wie auch deren Befestigung bzw. deren für die Befestigung an der inneren Halterung vorgesehenen Abschnitte und auch die Endteile der inneren Halterung selbst verhältnismäßig einfach ausgebildet sein sollen.

Diese Aufgabe wird bei einer Gleitschutzkette der eingangs genannten Art dadurch gelöst, daß die beiden Endteile der inneren Halterung von der Form und dem Querschnitt der inneren Halterung abweichende Verformungen aufweisen, daß die den Endteilen der inneren Halterung zugewandten Abschnitte der Verschlußteile Ausformungen aufweisen, welche unmittelbar benachbart zu den Verformungen der Endteile der inneren Halterung angeordnet und daß die Endteile der inneren Halterung mit den Abschnitten der Verschlußteile mittels einer aus Gummi oder Kunststoff bestehenden einstückig ausgebildeten Umhüllung verbunden sind.
Diese Ausbildung der Befestigung der Verschlußteile an den jeweiligen Endteilen der inneren Halterung gewährleistet einerseits einen ausreichend zugkräftigen Anschluß der Verschlußteile an der inneren Halterung, andererseits einen Schutz für die Verbindungsstelle selbst vor Korrosion und/oder Verschmutzung und die Herstellbarkeit in einem Arbeitsgang.

Vorteilhaft bilden die Verformungen der Endteile der inneren Halterung mit den Ausformungen an den Verchlußteilen eine formschlüssige Verbindung.
Diese Ausbildung der Verbindung der Verschlußteile mit den Endteilen der inneren Halterung gewährleistet eine zusätzliche Erhöhung der Belastbarkeit der Verbindungen einerseits, andererseits aber auch eine korrekte Zuordnung der miteinander zu verbindenden Teile beim Einlegen derselben in die Vulkanisier- bzw Spritzvorrichtung und auch während des Vulkanisier- bzw. Umspritzvorganges selbst.

Vorteilhaft sind die Verformungen der Endteile der inneren Halterung als Verdickungen, und/oder als Kerben, und/oder Quetschungen und/oder als gegebenenfalls Aufpreßteile ausgebildet.
Solche Aufpreßteile erlauben einerseits die Herstellung einer auf Zug beanspruchbaren Verbindung, andererseits aber auch eine drehbare Ausbildung der Verschlußteile an den Endteilen der inneren Halterung.

In vorteilhafter Weiterbildung der Erfindung ist der dem Endteil der inneren Halterung zugeordnete Abschnitt des als Haken ausgebildeten Verschlußteiles gegenüber dem den Haken bildenden Teil des Verschlußteiles um 90° verdreht ausgebildet.

Diese Anordnung des dem Endteil der inneren Halterung zugewandten Abschnittes dieses Verschlußteiles erlaubt eine beliebig hohe Ausbildung der aus Gummi oder Kunststoff hergestellten Umhüllung, da diese in der Reifenebene und nicht senkrecht dazu angeordnet ist.

Vorteilhaft ist der dem Endteil der inneren Halterung zugewandte Abschnitt des als Haken ausgebildeten Verschlußteils gegenüber dem den Haken bildenden Teil des Verschlußteils um 8° in der Reifenebene zur Radachse hin abgebogen.
Durch diese Abbiegung wird gewährleistet, daß der den Haken bildende Teil des Verschlußteils der Ringform der inneren Halterung angepaßt und besser in den als Öse ausgebildeten anderen Verschlußteil einführbar ist.

In weiterer vorteilhafter Ausbildung der Erfindung ist der den Haken bildende Verschlußteil als Stanzteil ausgebildet und das dem Endteil der inneren Halterung zugewandte Ende des Hakens aus der Ebene des Hakens heraus abgebogen.
Diese vorbeschriebene Ausbildung des in die aus Gummi bzw. Kunststoff bestehende Umhüllung einstehenden Endes des hakenförmigen Verschlußteiles ist in einfacher und damit kostengünstiger Weise herstellbar.

Gemäß einer weiteren, die Aufgabenstellung ebenfalls und gegebenenfalls noch einfacher erfüllende Ausführungsform der Erfindung, weisen die beiden Endteilen der inneren Halterung, ausgehend von Verschlußteilen und deren Befestigung der eingangs genannten Art, von der Form und dem Querschnitt der inneren Halterung abweichende Verformungen auf, sind die Verschlußteile vollständig aus Gummi oder Kunststoff hergestellt und umschließen haltend die jeweiligen Endteile der inneren Halterung mit einem diesen Endteilen zugewandten Abschnitt.
Diese besondere Ausführungsform kennzeichnet sich in erster Linie dadurch, daß die Verschlußteile einstückig ausgebildet sind, d.h., das bei den vorstehend beschriebenen Ausführungsformen beschriebene Verschlußteil wird von der aus Gummi oder Kunststoff bestehenden Umhüllung selbst gebildet, hierdurch wird eine besonders einfache Form der Herstellung gewährleistet.

Vorteilhaft ist der dem Endteil der inneren Halterung zugewandte Abschnitt des als Haken ausgebildeten Verschlußteils gegenüber dem den Haken bildenden Teil des Verschlußteils um 8° in der Reifenebene zur Radachse hin abgebogen und schließlich können die die Verformungen aufweisenden Endteile der inneren Halterung auch jeweils um die Achse der inneren Halterung drehbare Aufpreßteile aufweisen, welche dann von dem vollständig aus Gummi oder Kunststoff hergestellten Verschlußteil vollständig haltend umschlossen ist und dadurch eine Drehung der Verschlußteile ermöglicht.

Weitere Aspekte der vorliegenden Erfindung sind in den unabhängigen Ansprüchen 12 und 16 definiert.

Aufgrund des Umstandes, daß gemäß Anspruch 16 zusätzlich auch die Distanzstücke mit der Halterung unverschieblich durch Umspritzen verbunden sind, ergibt sich der wesentliche Vorteil, daß nunmehr sowohl die Umhüllungen für die Verschlußteile als auch die Distanzstücke in einem einzigen Arbeitsgang aufgespritzt werden können, wodurch eine besonders kostengünstige Produktion erzielt werden kann.

Im folgenden werden mehrere Ausführungsbeispiele der Erfindung anhand der Zeichnung näher beschrieben. In der Zeichnung zeigen:
- Fig. 1: eine als offener, verschließbarer Federstahlbügel ausgebildete innere Halterung einer Gleitschutzkette,
- Fig. 2: eine Seitenansicht des als Haken ausgebildeten Verschlußteils der Halterung mit dem Endteil der inneren Halterung zugewandten, aus der Hakenebene herausgebogenen Abschnitt,
- Fig. 3: eine Draufsicht auf den Haken gemäß Fig. 2,
- Fig. 4: eine Seitenansicht der an einem Endteil der inneren Halterung als aus Gummi- bzw. Kunststoff bestehende Umhüllung hergestellten Befestigung,
- Fig. 5: eine Draufsicht auf die Befestigung gemäß Fig. 4,
- Fig. 6: eine Seitenansicht des als Haken ausgebildeten Verschlußteils entsprechend Fig. 2, jedoch mit einem anders verformten Abschnitt,
- Fig. 7: eine Draufsicht auf den Haken gemäß Fig. 6,
- Fig. 8: eine Seitenansicht der an einem Endteil der inneren Halterung als aus Gummi- bzw. Kunststoff bestehende Umhüllung hergestellten Befestigung,
- Fig. 9: eine Draufsicht auf die Befestigung gemäß Fig. 8,
- Fig. 10: eine Draufsicht auf ein als Haken ausgebildetes und mit seinem um 90° gedrehten Abschnitt an der inneren Halterung formschlüssig befestigtes Verschlußteil,
- Fig. 11: eine Seitenansicht auf den Haken gemäß Fig. 10,
- Fig. 12: eine Draufsicht auf den Haken gemäß Fig. 10, jedoch mit aus Gummi- bzw. Kunststoff bestehender Umhüllung,
- Fig. 13: eine Seitenansicht auf den Haken gemäß Fig. 12,
- Fig. 14: eine Draufsicht auf ein aus einem Draht hergestelltes und als Öse ausgebildetes Verschlußteil,
- Fig. 15: eine Seitenansicht der Öse gemäß Fig. 14,
- Fig. 16: eine Draufsicht auf die mittels einer aus Gummi oder Kunststoff bestehenden Umhüllung am Endteil der inneren Halterung befestigte Öse gemäß Fig. 14,
- Fig. 17: eine Seitenansicht der Öse gemäß Fig. 16,
- Fig. 18: eine Draufsicht auf ein als flaches Stanzteil und als Öse ausgebildetes Verschlußteil mit formschlüssigem Anschluß am Endteil der inneren Halterung,
- Fig. 19: eine Seitenansicht auf die Öse gemäß Fig. 18,
- Fig. 20: eine Draufsicht auf die mittels einer aus Gummi oder Kunststoff bestehenden Umhüllung am Endteil der inneren Halterung befestigte Öse gemäß Fig. 18
- Fig. 21: eine Seitenansicht auf die Öse gemäß Fig. 20
- Fig. 22: eine Draufsicht auf eine einstückig aus Gummi oder Kunststoff hergestellte Öse,
- Fig. 23: eine Seitenansicht auf die Öse gemäß Fig. 21,
- Fig. 24: eine Seitenansicht auf einen einstückig aus Gummi oder Kunststoff heregestellten Haken,
- Fig. 25: eine Draufsicht auf den Haken gemäß Fig. 24, und
- Fig. 26: einen Schnitt durch ein auf den Federstahlring aufgespritztes Distanzstück.

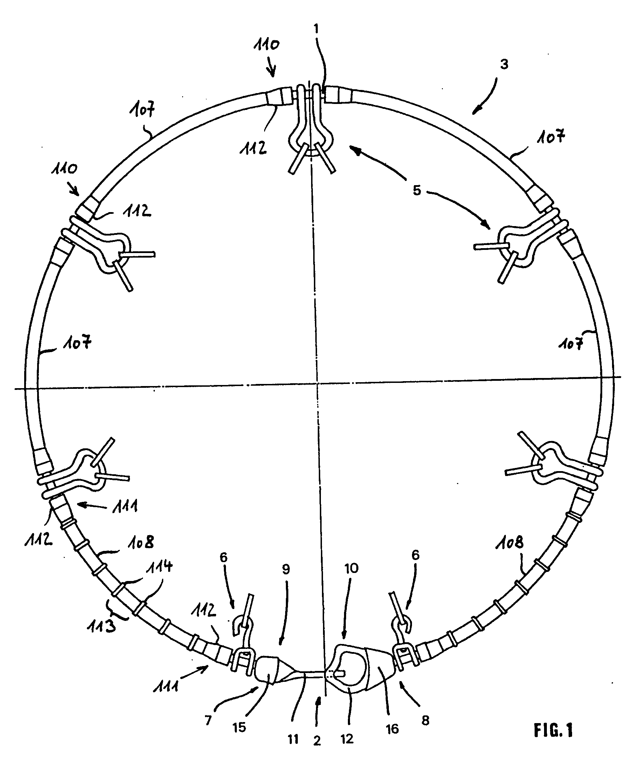

In Fig. 1 ist eine aus einem Federstahlring 1 gebildete und eine Öffnung 2 aufweisende innere Halterung 3 abgebildet, auf welcher insgesamt 6 aus Kunststoff bestehende Distanzstücke 107, 108 aufgespritzt sind und jeweils Befestigungsmittel 5 bzw. 6 zum Anschluß eines nicht abgebildeten Laufnetzes der Gleitschutzkette zwischen sich bzw. mit den an den Endteilen 7 bzw. 8 der inneren Halterung 3 vorgesehenen Verschlußteilen 9 bzw. 10, welche als Haken 11, 11' bzw. 11'' bzw. als Öse 12 bzw. 12' ausgebildet sind, einschließen.

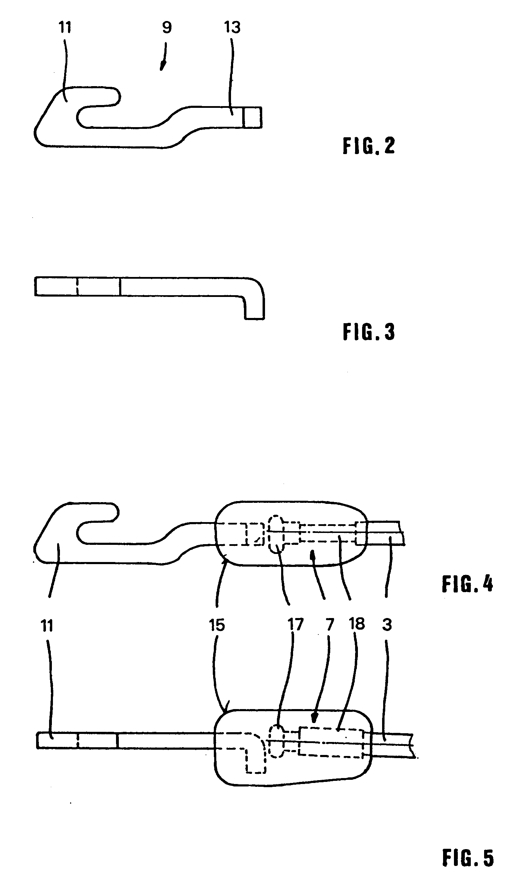

Die in den Figuren 2 bis 21 detaillierter gezeigten Verschlußteile 9 bzw. 10 sind mit ihren Abschnitten 13, 13' bzw. 13'' und 14 bzw. 14' an den Endteilen 7 bzw. 8 der inneren Halterung 3 unabhängig von ihren unterschiedlich ausgebildeten Abschnitten 13, 13' bzw. 13'' und 14 bzw. 14' mittels einer aus Gummi oder Kunststoff bestehenden Umhüllung 15 bzw. 16 befestigt.

Diese in einem Vulkanisier- bzw. Spritzvorgang in einfacher und preiswerter Weise herstellbaren Umhüllungen 15 bzw. 16 erlauben die unterschiedlichsten Ausbildungsformen der in diese Umhüllungen 15 bzw. 16 einstehenden Abschnitte 13, 13' bzw. 13'' und 14 bzw. 14' der haken- und/oder ösenförmigen Verschlußteile 9 bzw. 10.

So zeigen die Fig. 2 bis 5 eine besonders einfache Gestaltung des als Haken 11 ausgebildeten Verschlußteils 9, und zwar insbesondere hinsichtlich des in die Umhüllung 15 einstehenden Abschnitts 13. Dieser Haken 11 selbst ist als flaches Stanzteil ausgebildet, sein Abschnitt 13 wird in einfacher Weise, wie aus Fig. 3 und Fig. 5 ersichtlich, umgebogen und gewährleistet damit eine zugfeste Einbindung in die Umhüllung 15.

Ebenfalls einfach ist das Endteil 7 der inneren Halterung 3 ausgebildet, es weist ein nietenkopfförmig aufgestauchtes Ende 17 auf und/oder ist mit einer ebenfalls in den Fig. 4 und 5 gezeigten Quetschung 18 der inneren Halterung 3 in Abweichung von ihrem kreisförmigen Querschnitt versehen. Diese Verformungen 17 bzw. 18 gewährleisten ebenfalls eine zugfeste Verbindung der inneren Halterung 3 in der Umhüllung 15.

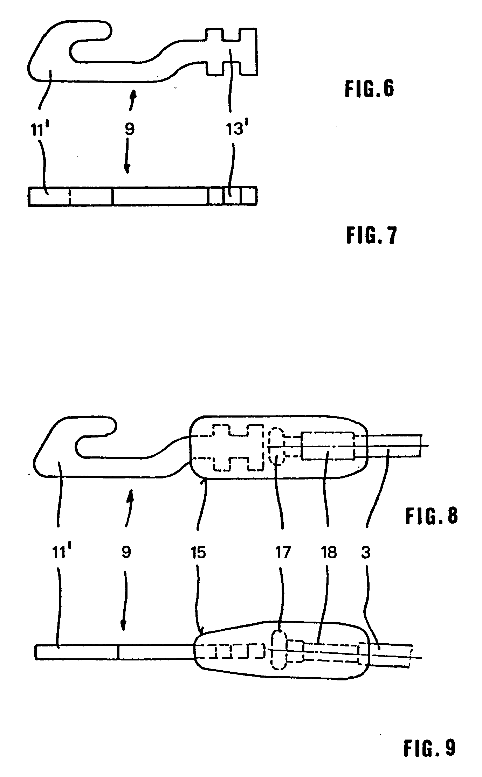

In den Fig. 6 bis 9 ist ein als Haken 11' ausgebildetes Verschlußteil 9 mit einem anders ausgebildeten Abschnitt 13' dargestellt, hier ist der Abschnitt 13' nicht aus der Ebene des Hakens 11' herausgebogen, sondern, wie insbesondere den Fig. 6 und 8 zu entnehmen ist, mit einer in der Ebene des Hakens 11' liegenden H-förmigen Ausbildung aus einem Flachstahl herausgestanzt. Die Verbindung des Hakens 11' mit dem Endteil 7 der inneren Halterung 3 geschieht ebenfalls mit einer aus Gummi oder Kunststoff bestehenden Umhüllung 15.

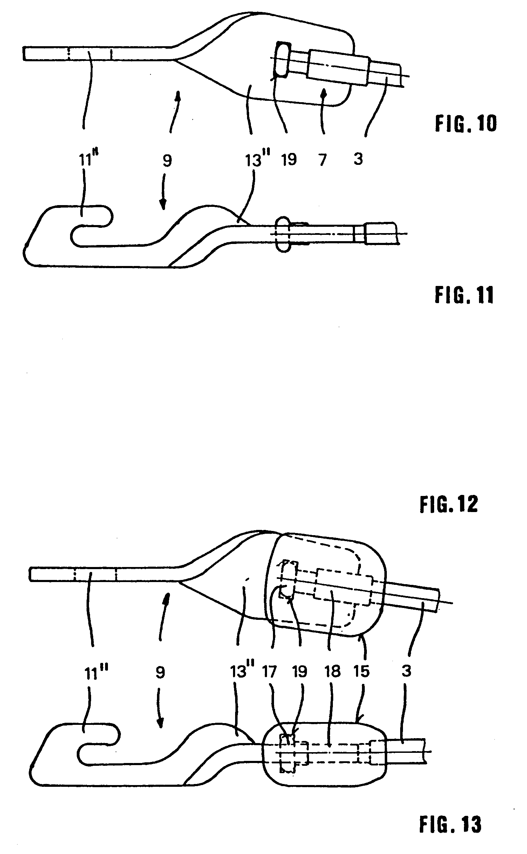

In den Fig. 10 bis 13 ist eine dritte Ausführungsform des als Haken 11'' ausgebildeten Verschlußteiles 9 abgebildet, welche sich dadurch gegenüber den vorbeschriebenen Ausführungsformen auszeichnet, daß es zwar ebenfalls aus einem Flachstahl herausgestanzt, jedoch sein flächig ausgebildeter Abschnitt 13'' aus der Ebene des Hakens 11'' um 90° herausgedreht ist.

Diese Drehung erlaubt es, die in den Fig. 12 und 13 abgebildete Umhüllung 15 in ihrer zur Radebene parallelen Höhe variabel auszubilden, also ohne Beachtung bestimmter Maximalabmessungen, welche senkrecht zur Radebene bereits allein durch die Höhe des Hakens 11'' gemäß Fig. 11 bzw. Fig. 13 begrenzend vorgegeben wäre.

In weiterer besonderer Ausbildung gegenüber den vorbeschriebenen Ausführungsformen der Haken 11 und 11' weist der Abschnitt 13'' des Hakens 11'' eine der jeweiligen Ausbildung des Endteils 7 der inneren Halterung 3 entsprechend angepaßte Ausformung 19 auf, welche eine formschlüssige Verbindung des Hakens 11'' mit der inneren Halterung 3 erlaubt.

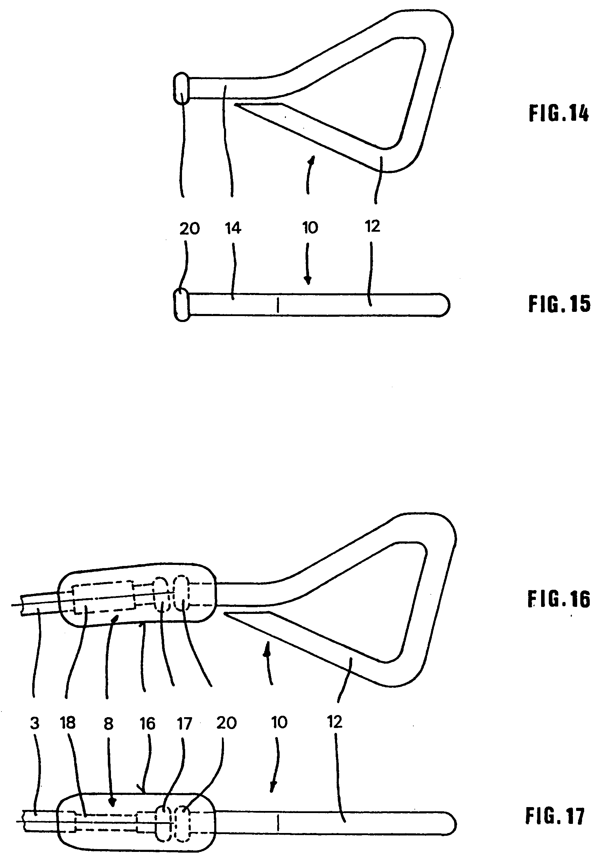

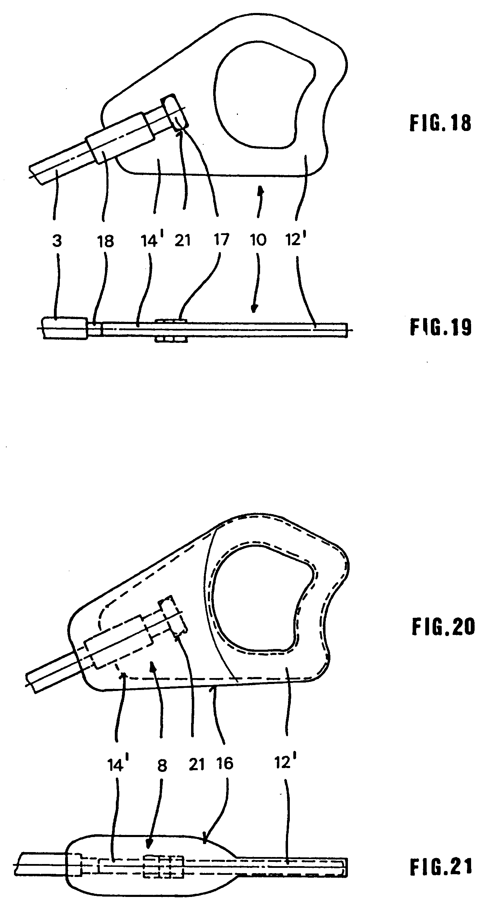

In den Fig. 14 bis 17 ist nun ein als Öse 12 ausgebildetes Verschlußteil 10 dargestellt, welches aus einem Draht gebogen ist und wie die innere Halterung 3 einen kreisförmigen Querschnitt aufweist. Der dem Endteil 8 der inneren Halterung 3 zugewandte Abschnitt 14 der Öse 12 weist ebenfalls ein nietenkopfförmig aufgestauchtes Ende 20 auf und ist, wie den Fig. 16 und 17 zu entnehmen ist, unmittelbar benachbart zum Ende 8 der inneren Halterung 3 in der aus Gummi oder Kunststoff bestehenden Umhüllung 16 eingebunden.

In Fig. 18 bis 21 ist schließlich noch eine zweite Ausbildung des als Öse 12' ausgebildeten Verschlußteils 10 dargestellt, welche sich dadurch auszeichnet, daß dieses ähnlich wie die vorbeschriebenen hakenförmigen Verschlußteile 11, 11' und 11'' in einfacher Form aus einem Flacheisen herausgestanzt ist.

Es weist in seinem dem Endteil 8 der inneren Halterung 3 zugewandten Abschnitt 14' eine der Ausformung 19 im Abschnitt 13'' des Hakens 11'' entsprechende Ausformung 21 auf, welche ebenfalls eine formschlüssige Verbindung dieser Öse 12' mit der inneren Halterung 3 erlaubt.

Wie in den Fig. 20 und 21 dargestellt, ist die gesamte Öse 12' einschließlich des in ihr formschlüssig befestigten Endteils 8 der inneren Halterung 3 mit Gummi oder Kunststoff umhüllt, wobei selbstverständlich, wie insbesondere aus Fig. 21 hervorgeht, der Abschnitt 14' der Öse 12' dicker umhüllt ist.
Diese vollständig umhüllte Ausführungsform der Öse 12' gewährleistet einen guten Schutz vor Korrosion und Verschmutzung des Verschlußteils 10.

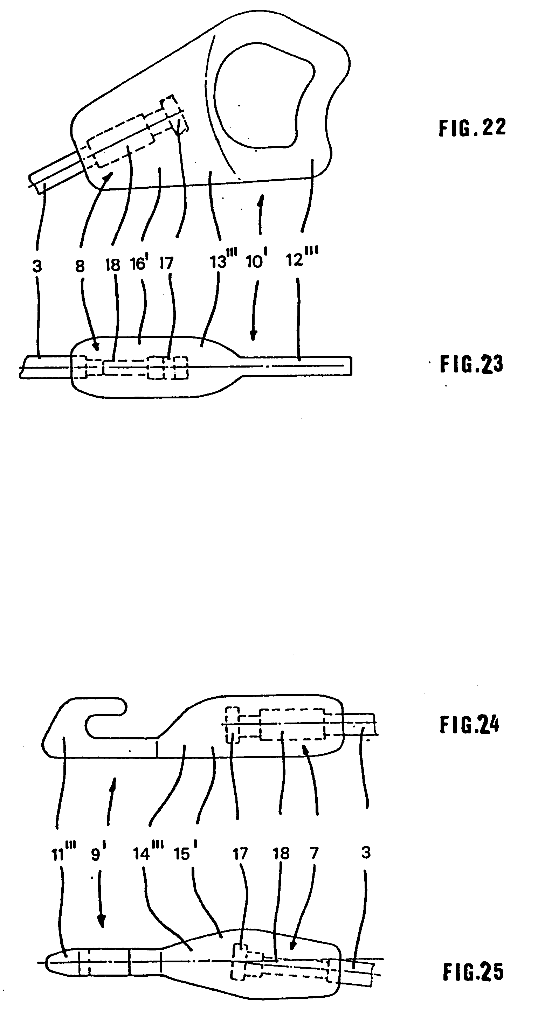

Die in den Fig. 22 bis 25 dargestellte Ausführungsform geht nun insofern noch einen Schritt weiter, als die einen Haken 11''' bzw. eine Öse 12''' bildenden Verschlußteile 9' bzw. 10' keinen metallischen Kern mehr besitzen, sondern selbst vollständig aus Gummi und/oder Kunststoff hergestellt sind, wobei ihre Abschnitte 13''' und 14''' die Umhüllungen 15' bzw. 16' für die Endteile 7 bzw. 8 mit den Verformungen 17 bzw. 18 bilden.

Hierbei ist, wie in Fig. 25 dargestellt, die Längsachse des hakenförmigen Verschlußteils 9' gegenüber der Längsachse der inneren Halterung 3 um zirka 8° innerhalb der Reifenebene zur Radachse hin abgebogen, wodurch das Einhaken in den ösenförmigen Verschlußteil 10' wesentlich erleichtert wird.

Schließlich können auch, dies ist nicht in den Figuren dargestellt, auf den die Verformungen 17 bzw. 18 aufweisenden Endteilen 7 bzw. 8 der inneren Halterung 3 Aufpreßhülsen vorgesehen sein, welche so von den vollständig aus Gummi und/oder Kunststoff bestehenden Verschlußteilen 9' bzw. 10' umhüllt werden, daß die Verschlußteile dann drehbar auf der inneren Halterung 3 gelagert sind.

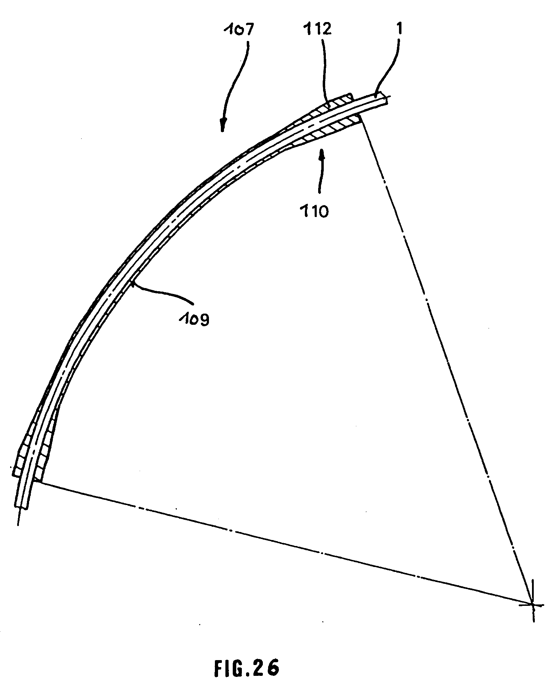

Zwischen den Befestigungsmitteln 5 bzw. 6 sind insgesamt sechs Distanzstücke 107 bzw. 108 auf dem Federstahlring 1 angeordnet, wobei diese aus auf den Federstahlring aufgespritzten Kunststoff bestehen, vgl. auch die Schnittdarstellung gemäß Fig. 26.

Wegen der durch die Umspritzung gegebene feste Auflage auf dem Federstahlring 1 können die Distanzstücke 107 bzw. 108 in ihrem mittleren Bereich 109 verhältnismäßig dünnwandig und damit materialsparend ausgebildet sein.

Um wegen dieser verhältnismäßig dünnen Ausbildung der Distanzstücke 107 bzw. 108 ein Aufrutschen insbesondere der Befestigungsmittel 105 auf die Distanzstücke 107 bzw. 108 zu vermeiden, sind die jeweiligen Endabschnitte 110 bzw. 111 mit radialen Verdickungen 112 versehen, welche seitliche Begrenzungen für die zwischen ihnen angeordneten Befestigungsmittel 5 bzw. 6 bilden.

Die der Öffnung 2 benachbarten Distanzstücke 108 weisen noch über ihre Länge in annähernd fingerbreiten Abständen 113 verteilte ringförmige radiale Wülste 114 auf, welche die Griffigkeit dieser für die Betätigung der Halterung vorgesehenen Distanzstücke 108 erhöhen.

Die neuartige Halterung mit aufgespritzten Distanzstücken gewährleistet bei einfacher Herstellung einen genauen Sitz der Befestigungsmittel 5 bzw. 6 auf ihr und damit des Laufnetzes auf der Reifenoberfläche, insbesondere wird ein während des Fahrbetriebes auftretendes Verschieben der Befestigungsmittel 5 bzw. 6 und damit ein Verschieben des Laufnetzes und Abheben desselben von der Reifenoberfläche vermieden. Insgesamt wird folglich sowohl die Betriebssicherheit der mit der neuen Halterung ausgestatteten Gleitschutzkette wie auch deren Lebensdauer erhöht.

Im Vorstehenden wurde davon ausgegangen, daß die Distanzstücke aus Kunststoff bestehen. Gegebenenfalls können sie jedoch, ebenso wie die Umhüllungen, auch aus erforderlichenfalls verstärktem Gummi bestehen und in diesem Fall in einem einzigen Arbeitsgang auf den Federstahlring aufvulkanisiert werden.

## Patentansprüche

1. Verschlußteile und deren Befestigung an den Endteilen einer an einer Stelle offenen, aus einem Federstahlring oder einem Stahlseil gebildeten inneren Halterung einer Gleitschutzkette, **dadurch gekennzeichnet,** daß die beiden Endteile (7 bzw. 8) der inneren Halterung (3) von der Form und dem Querschnitt der inneren Halterung (3) abweichende Verformungen (17 bzw. 18) aufweisen, daß die den Endteilen (7 bzw. 8) der inneren Halterung (3) zugewandten Abschnitte (13, 13' und 13'' bzw. 14 und 14') der Verschlußteile (9 bzw. 10) Ausformungen (19 bzw. 21) aufweisen, welche unmittelbar benachbart zu den Verformungen (17 bzw. 18) der Endteile (7 bzw. 8) der inneren Halterung (3) angeordnet und daß die Endteile (7 bzw. 8) der inneren Halterung (3) mit den Abschnitten (13, 13' und 13'' bzw. 14 und 14') der Verschlußteile (9 bzw. 10) mittels einer aus Gummi oder Kunststoff bestehenden einstückig ausgebildeten Umhüllung (15 bzw. 16) verbunden sind.

2. Verschlußteile und deren Befestigung nach Anspruch 1, **dadurch gekennzeichnet,** daß die Verformungen (17 bzw. 18) der Endteile (7 bzw. 8) der inneren Halterung (3) mit den Ausformungen (19 bzw. 21) an den Verschlußteilen (9 bzw. 10) eine formschlüssige Verbindung bilden.

3. Verschlußteile und deren Befestigung nach Anspruch 2, **dadurch gekennzeichnet,** daß die Verformungen (17) der Endteile (7 bzw. 8) der inneren Halterung (3) als nietenkopfförmige Verdickungen ausgebildet sind.

4. Verschlußteile und deren Befestigung nach Anspruch 2, **dadurch gekennzeichnet,** daß die Verformungen (18) als Kerben und/oder Quetschungen ausgebildet sind.

5. Verschlußteile und deren Befestigung nach Anspruch 2, **dadurch gekennzeichnet,** daß die Verformungen als gegebenenfalls drehbare Aufpreßteile ausgebildet sind.

6. Verschlußteile und deren Befestigung nach Anspruch 1, **dadurch gekennzeichnet,** daß der dem Endteil (7) der inneren Halterung (3) zugeordnete Abschnitt (13'') des als Haken (11'') ausgebildeten Verschlußteiles (9) gegenüber den den Haken (11'') bildenden Teil des Verschlußteiles (9) um 90° verdreht ausgebildet ist.

7. Verschlußteile und deren Befestigung nach Anspruch 1, **dadurch gekennzeichnet,** daß der dem Endteil (7) der inneren Halterung (3) zugewandte Abschnitt (13, 13' und 13'') des als Haken (11, 11' und 11'') ausgebildeten Verschlußteils (9) gegenüber dem den Haken bildenden Teil des Verschlußteils (9) um 8° in der Reifenebene zur Radachse hin abgebogen ist.

8. Verschlußteile und deren Befestigung nach Anspruch 1, **dadurch gekennzeichnet,** daß der einen Haken (11) bildende Verschlußteil (9) als Stanzteil ausgebildet und der dem Endteil (7) der inneren Halterung (3) zugewandte Abschnitt des Hakens (11) aus der Ebene des Hakens heraus abgebogen ist.

9. Verschlußteile und deren Befestigung an den Endteilen einer an einer Stelle offenen, aus einem Federstahlring oder einem Stahlseil gebildeten inneren Halterung einer Gleitschutzkette, **dadurch gekennzeichnet,** daß die beiden Endteile (7 bzw. 8) der inneren Halterung (3) von der Form und dem Querschnitt der inneren Halterung (3) abweichende Verformungen (17 bzw. 18) aufweisen, daß die Verschlußteile (9' bzw. 10') vollständig aus Gummi oder Kunststoff hergestellt sind und die jeweiligen Endteile (7 bzw. 8) der inneren Halterung (3) mit einem diesen Endteilen zugewandten Abschnitt (13''' bzw. 14''') haltend umschließen.

10. Verschlußteile und deren Befestigung nach Anspruch 9, **dadurch gekennzeichnet,** daß der dem Endteil (7) der inneren Halterung (3) zugewandte Abschnitt (13''') des als Haken (11''') ausgebildeten Verschlußteils (9') gegenüber dem den Haken (11''') bildenden Teil des Verschlußteils (9') um 8° in der Reifenebene zur Radachse hin abgebogen ist.

11. Verschlußteile und deren Befestigung nach Anspruch 9, **dadurch gekennzeichnet,** daß die in die Verschlußteile (9' bzw. 10') einstehenden und von diesen vollständig umschlossenen Endteile (7 bzw. 8) im Bereich ihrer Verformungen (17 bzw. 18) um die Achse der inneren Halterung (3) verdrehbare Aufpreßteile aufweisen.

12. Innere Halterung für eine Gleitschutzkette, die aus einem Federstahl oder Stahlseil gebildet ist, an einer Stelle offen und mittels Verschlußteilen, die an den Endteilen des Federstahls bzw. Stahlseils befestigt sind, verschließbar ist, dadurch gekennzeichnet, daß die beiden Endteile (7 bzw. 8) der inneren Halterung (3) von der Form und dem Querschnitt der inneren Halterung (3) abweichende Verformungen (17 bzw. 18) aufweisen und daß jedes Endteil (7 bzw. 8) der inneren Halterung (3) mittels einer aus Kunststoff bestehenden Umhüllung (15 bzw. 16) mit dem entsprechenden Verschlußteil (9 bzw. 10; 9' bzw. 10') durch Umspritzen einstückig verbunden ist.

13. Halterung nach Anspruch 12, dadurch gekennzeichnet, daß die den Endteilen (7 bzw. 8) der inneren Halterung (3) zugewandten Abschnitte (13, 13' und 13'' bzw. 14 und 14') der Verschlußteile (9 bzw. 10) Ausformungen (19 bzw. 21) aufweisen, welche unmittelbar benachbart zu den Verformungen (17 bzw. 18) der Endteile (7 bzw. 8) der inneren Halterung (3) angeordnet sind und daß die Endteile (7 bzw. 8) der inneren Halterung (3) mit den Abschnitten (13, 13' und 13'' bzw. 14 und 14') der Verschlußteile (9 bzw. 10) mittels der einstückig ausgebildeten Umhüllung (15 bzw. 16) verbunden sind.

14. Halterung nach Anspruch 13, gekennzeichnet durch eines der kennzeichnenden Merkmale der Ansprüche 2 bis 8.

15. Halterung nach Anspruch 12, dadurch gekennzeichnet, daß die Verschlußteile (9' bzw. 10') vollständig aus Kunststoff hergestellt sind und die jeweiligen Endteile (7 bzw. 8) der inneren Halterung (3) mit einem diesen Endteilen zugewandten Abschnitt (13''' bzw. 14''') haltend umschließen.

16. Innere Halterung für eine Gleitschutzkette, die aus einem Federstahl oder Stahlseil gebildet ist, an einer Stelle offen und mittels Verschlußteilen, die an den Endteilen des Federstahls bzw. Stahlseils befestigt sind, verschließbar ist, wobei auf dem Federstahl bzw. Stahlseil aus Kunststoff oder Gummi hergestellte Distanzstücke angeordnet sind, zwischen denen jeweils Befestigungsmittel für den Anschluß des Laufnetzes der Gleitschutzkette vorgesehen sind, dadurch gekennzeichnet, daß die beiden Endteile (7 bzw. 8) der inneren Halterung (3) von der Form und dem Querschnitt der inneren Halterung (3) abweichende Verformungen (17 bzw. 18) aufweisen, daß jedes Endteil (7 bzw. 8) der inneren Halterung (3) mittels einer aus Kunststoff bestehenden Umhüllung (15 bzw. 16) mit dem entsprechenden Verschlußteil (9 bzw. 10; 9' bzw. 10') durch Umspritzen einstückig verbunden ist, und daß die Distanzstücke (107 bzw. 108) mit der Halterung (3) unverschieblich durch Umspritzen verbunden sind.
